# EUROPEAN PATENT APPLICATION

(11) **EP 0 723 816 A2**
(43) Date of publication of application: **31.07.1996**
(21) Application number: 96100054.4
(22) Date of filing: 04.01.1996
(51) Int. Cl.: B05B 7/26, B29B 7/76, B01F 15/04

(54) **Method and apparatus for dispensing two-component foam**

(30) Priority: 27.01.1995 US 379720
(71) Applicant: NORDSON CORPORATION, Westlake, OH 44145 (US)
(72) Inventor: Wacker, Robert L., Wellington, Ohio 44090 (US); Hoversten, William R., Stow, Ohio 44224 (US); Reep, Dan, Amherst, Ohio 44001 (US)
(74) Representative: Eisenführ, Speiser & Partner

(57) **Abstract**

A method and apparatus for dispensing a foam material formed from two different components which react chemically with one another when combined to produce the foam material. The two components are maintained in separate reservoirs. A mixing and dispensing head is provided for mixing the components immediately prior to dispensing the foam material and for dispensing the foam intermittently therefrom. The components are withdrawn from the reservoirs and supplied to the mixing and dispensing head only when the foam material is dispensed, providing a "closed ended" system. Metering pumps are used to control the flow rate of at least one of the components and to control the mass ratio of at least one of the components relative to the other component.

## Description

### BACKGROUND OF THE INVENTION

### 1. Field of the Invention

This invention relates to foam materials produced from a chemical reaction by mixing two liquid components, and in particular to a system for dispensing the foam material and applying the foam material to a substrate.

### 2. Description of the Prior Art

Two component foaming systems are used in a wide variety of applications to create a closed-cell foam product and to apply the foam product to a substrate. Foam products produced in this manner can be used as sealants which provide barriers against air, dust, vapor and fluids in various applications. They also find application in providing thermal or sound insulation layers.

In two component foam dispensing systems, the foam is created by a chemical reaction between the two liquid components. When the two liquid components are mixed together, the chemical reaction occurs, creating a new compound, such as polyurethane, which is the foamed material, and creating a foaming agent, such as carbon dioxide, which is entrained within with the foamed material to create the foam. Since the chemical reaction occurs almost instantaneously, the two liquid components must be mixed together in a dispensing head immediately prior to applying the foam material onto the substrate.

In order to properly and effectively create and apply two component foam products, several factors must be considered. One consideration is the proper ratio of liquid components. In order to create the foam product with the desired physical properties and appearance, the mass quantities of each of the components must be properly matched. This requires that the flow rate of each of the liquid components that is supplied to the mixing and dispensing bead be accurately controlled. Since the mass flow of each component will vary depending upon several factors, such as the amount of entrained air in the liquid and the temperature of the liquid, it is sometimes difficult to accurately meter the flow of the components to the dispensing head.

Another consideration is the separate maintenance of each of the components prior to dispensing and the proper mixing of the components in the dispensing head. Since the components when mixed will almost instantly react to produce the foamed product, it is important that the components remain separate and that mixing of the components is avoided until immediately prior to dispensing the foam onto a substrate. For this purpose, a dispensing head or gun must be used in which the two components can be mixed and in which the mixture is then immediately applied to the substrate.

Another consideration is the maintenance of the dispensing head or gun in a clean condition. After the liquid components have been mixed together in the head, the foam product is created, and this foam product can build up along the dispensing flow path inside the gun. This build-up of foam material must be cleaned from the gun periodically, and for this purpose a purge system is usually provided. The purge system is used to provide a supply of an appropriate cleaning solvent to the dispensing flow path of the gun to clean the flow path.

Another consideration is the ability of the system to accommodate intermittent operation of the dispensing head or gun. In most dispensing systems, the foam product is not dispensed continually onto the substrate. Instead, the dispensing flow is turned on and off, and this intermittent operation of the dispensing bead must be accommodated. When the dispensing flow is turned on and off, there can be intermittent increases in pressure of the lines supplying the liquid components to the dispensing bead. These pressure increases can affect the flow rate of the components, and, if the mass flow rate of one component varies relative to the other component, the components will not be mixed in the proper proportion, causing an adverse effect to the properties and appearance of the foam product being dispensed.

Many prior art systems used for dispensing two-component foams have been "open-ended" systems. Systems of this type provide for recirculation of the flow of the liquid components when the dispensing bead is turned off. In this way pressure transients in the supply lines associated- with intermittent operation of the dispensing head are avoided. The liquid components are constantly flowing through the system, so that the pressure of the components can be held relatively constant and the proper proportions of the components can be maintained.

In addition to avoiding pressure gradients, such open-ended systems provide for proper temperature conditioning of the components. The components are normally supplied to the dispensing head at room temperature. However, maintaining the components at the proper temperature can be difficult if temperatures in which the system is operated vary significantly from a normal room temperature. These problems can arise if the foam dispensing system is located in a warm plant or outside in hot or cold weather. To avoid these problems, the component supply tanks are often maintained in a temperature bath. Since open-ended systems recirculate the components back to the supply tanks when dispensing the foam product is interrupted, the components are constantly being recirculated back to the temperature controlled tanks. The recirculation maintains a constant supply of the components at the proper temperature. The components are not allowed to stagnate in the lines and are not allowed to be exposed to ambient temperatures for any significant period of time.

While recirculation in open-ended systems avoids pressure gradients and allows for proper temperature conditioning of the components, recirculation also present certain problems, particularly with high viscosity materials. High viscosity materials experience more pressure losses when being recirculated, and the energy created by these pressure losses can cause the materials to heat up, creating additional problems. In addition, recirculation of the components presents problems when gas injection or nucleation is used, since it becomes difficult to accurately control the amount of gas being injected into the components when they are being recirculated.

Gas injection or nucleation has been shown to have positive effects upon the mixing and dispensing of many components m two component foam systems, such as polyol used in a polyol/isocyanate system. The gas injection has often been accomplished in the prior art by simply injecting gas into one of the component supply tanks, with the flow of gas simply' bubbled through the liquid in the tank. While this simple gas injection method accomplished the desired purposes of providing nucleation, there was no control of the amount of gas being entrained in the component. The varying amount of gas injected in the component during the nucleation changed the density of the component/gas mixture and made it more difficult to control the proper mass flow of this component with respect to the other component to provide the proper ratio of components to the dispensing head.

### SUMMARY OF THE INVENTION

The present invention provides a unique two component foaming system that handles these and other problems. Unlike many systems of the prior art, the system of the present invention is a "closed-ended" system in which the liquid components which are used to produce the foam are not being constantly recirculated. Instead, the components flow through the supply lines to the dispensing head only when the foam is being dispensed onto the substrate. When the dispensing of the foam product from the head is interrupted, the flow of the liquid components through the supply lines to the dispensing head is stopped. This closed-ended design eliminates many of the components needed for recirculation and provides a simpler and more reliable system. In addition: the closed ended system allows for the addition of gas injection or nucleation to the system.

Pressure transients in the supply lines and the proper ratio of the components are controlled by using metering pumps to accurately meter the flow of the liquid components and `to supply the proper mass flow rate of each component so that the supplies of components are properly matched. The metering pumps can be located at location distant from the dispensing head. The metering pumps provide for an accurate allocation of each component, so that the resulting ratio of components provided to the dispensing head is more precise. By maintaining a more precise ratio of the liquid components, the resulting foam product is more uniform in physical properties as well as appearance.

To assist the function of the metering pumps: high pressure pumps are used to pump the components from the supply tanks. The use of high pressure pumps allows the metering pumps to perform their metering function without requiring the metering pumps to also be the main apparatus for moving the flow of components. The high pressure pumps thus reduce the pressure differential across the metering pumps, increasing the accuracy of the metering pumps and reducing wear. The high pressure pumps also act to reduce the effects on the air entrained in the materials taken from the supply tanks. By removing the materials under high pressure, the pumps collapse the entrained air bubbles in the material. The resulting material metered by the metering pumps has a more consistent density and can be more accurately metered.

The problem of temperature deviations in the supply lines is resolved by providing a temperature conditioning environment in the supply lines. The lines are each provided with an outer jacket into which water or some other temperature conditioning liquid circulates. The outer jacket is connected to a temperature conditioning unit which supplies the water to the jacket at the desired temperature. The temperature conditioning unit either heats or chills the water as necessary, and the water at the proper temperature is circulated in the outer jackets to maintain the liquid component in the inner supply line at the proper temperature.

If it is desired to use gas injection or nucleation for one or both of the components: it can be accomplished by injecting a precise amount of gas into one of the component supply hoses downstream of the metering pump. In this way: the mass flow of the component is accurately metered by the metering pump, this metering is not affected by the amount of gas injected into the component downstream of the pump, and the proper mass flow of component is supplied to the dispensing head.

These and other advantages are provided by the present invention of a method and apparatus for dispensing foam material. The method comprises the steps of maintaining separate reservoirs of at least two different components which react chemically with one another when combined to produce the foam material, providing a dispensing head for mixing the components immediately prior to dispensing the foam material and for dispensing the foam intermittently therefrom, and withdrawing the components from the reservoirs and supplying the components to the dispensing head only when the foam material is dispensed.

The apparatus of the present invention is a mixing and dispensing system for mixing and dispensing at least two different components which react chemically with one another when combined to produce a foam product. The system comprises at least two tanks, each containing one of the components; a mixing and dispensing head having a plurality of flow inlets and an outlet, the mixing and dispensing head intermittently dispensing the foam product from the outlet and mixing the two components together to form the foam product immediately prior to dispensing; supply lines connected to the liquid flow inlets of the mixing and dispensing head, the components flowing to the mixing and dispensing head through the supply lines when the foam product is dispensed, the components being held in the supply lines when the foam product is not being dispensed and flow of components is interrupted; metering pumps for supplying the different components under pressure to the supply lines, the metering pumps including controls for adjusting the pressure at which at least one of the components is supplied to the supply lines when the flow of the components is interrupted; and a temperature conditioner connected to the supply lines for maintaining the temperature of the components in the supply lines when the flow of components is interrupted.

### BRIEF DESCRIPTION OF THE DRAWINGS

FIG. **1** is a schematic diagram of the two-component foam dispensing system embodying the method and apparatus of the present invention.

FIG. **2** is a side sectional view of a mixing and dispensing head for use with the method and apparatus of the present invention.

FIG. **3** is a top plan of the mixing and dispensing head taken along line **3**―**3** of FIG. **2**.

### DETAILED DESCRIPTION OF THE PREFERRED EMBODIMENT

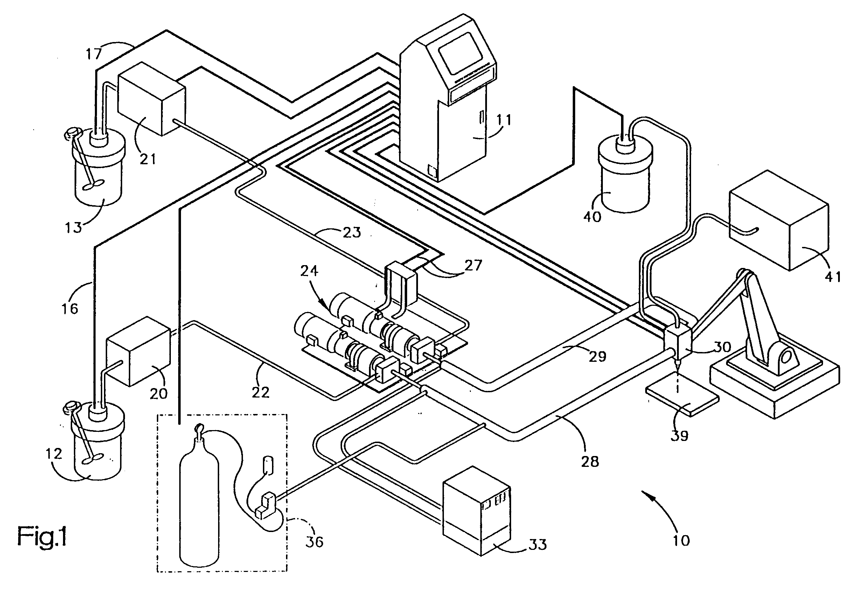

Referring more particularly to the drawings and initially to FIG. **1**, there is shown a two-component foam dispensing system **10** according to the present invention. The system **10** comprises a control console **11** which contains all of the control circuits for operating the system. The system **10** also comprises two supply tanks **12** and **13**, each providing a reservoir containing one of components which will be combined to form the foamed product. A first component is contained in the supply tank **12**, and a second component is contained in the other supply tank **13**. In this embodiment disclosed herein, the system **10** disclosed is a two-component foam system comprising polyol and isocyanate which combine to form polyurethane foam. Thus, in this embodiment, the first component contained in the supply tank **12** is polyol, and the second component contained in the supply tank **13** is isocyanate. It should be understood, however, that the system **10** can be used in other two-component foam combinations with the intended advantages.

The supply tanks **12** and **13** may be suitable supply tanks, which preferably each include an automatic stirring mechanism as is known in the art. Each of the supply tanks **12** and **13** may contain suitable level controls to monitor the amount of material in each tank, and each of the supply tanks is connected to the control console **11** by control lines **16** and **17**.

Preferably, high pressure pumps **20** and **21** are used to feed the components from the supply tanks **12** and **13** through suitable supply hoses **22** and **23** to metering pumps **24**. The metering pumps **24** are essentially the same as those shown in U.S. Patent No. 5,271,521 and U.S. Patent No. 5,332,125, the disclosures of which are hereby incorporated by reference in their entirety. As disclosed in Patents No. 5,271,521 and No. 5,332,125, the metering pumps may comprise a pair of gear-type motor-driven pumps. The volume at which each component is supplied by the pumps is controlled by the speed of a variable speed motor used to drive a gear of that pump. The two pumps are coupled or linked electrically such that the ratio of the volume or mass dispensed from one metering pump is in proportion to the volume or mass dispensed from the other pump. The metering pumps **24** are operated under control from the control console **11** and are connected to the control console **11** by control lines **27**.

The high pressure pumps **20** and **21** operate at around 300-500 psi and serve two purposes. First, they keep the pressure drop across the metering pumps **24** as low as possible. This allows the metering pumps to more accurately meter the flow rates of the components and reduces the wear on the metering pumps. Second, the high pressures created by the pumps **20** and **21** force any gas entrained within the components to be forced into solution, creating a liquid of more consistent density which can be more accurately pumped and metered.

The metering pumps **24** accurately meter the proper mass ratio of each of the two components from the supply tanks **12** and **13** and supply a mass flow according to this proper ratio through supply hoses **28** and **29** to a mixing and dispensing head **30**.

The supply hoses **28** and **29** from the metering pumps **24** to the mixing and dispensing head **30** are preferably jacketed to control the temperature of the components in the supply hose by circulating a liquid in the outer jacket. A temperature conditioning unit **33** supplies cooling or heating liquid, such as water, to the outer jacket of the supply hoses **28** and **29**. The control console **11** may also be connected to the temperature conditioning unit **33** by suitable control lines (not shown).

Since gas injection or nucleation has been shown to have positive effects upon the mixing and dispensing of the polyol in a two component system such as the polyol/isocyanate system disclosed, gas may be injected into the polyol supply hose **28** at the exit to the metering pump **24**, if desired. The control console **11** may be connected to a gas injection system **36** by suitable electrical lines, and a precise amount of a relatively inert gas, such as nitrogen, can be injected into the polyol supply hose **28** downstream of the metering pump **24**. Since the gas is injected into the component supply hose downstream of the metering pump and after the component has been accurately metered by the pump, the mass flow metering of the component is not affected by the amount of gas that is injected into the component, and maintaining the proper ratio of components is not adversely affected by gas injection.

Polyol or other components may contain some gas when they are received from a supplier, and it may be necessary to provide a suitable system for extracting air from the polyol before the polyol is placed in the supply tank. The air-free polyol could then be accurately metered by the metering pump, and a proper amount of gas could then be re-injected into the polyol by the gas injection system. This would enhance the accuracy of the metering of the polyol in the dispensing system. Alternatively, some system for determining the air in the polyol tank could be provided with the metering pumps and the gas injection system being adjusted according to this determination. The high pressure pumps **20** and **21** which serve to force the entrained air into solution do not necessarily extract the air from the components, but they do assure that a uniform liquid flow is provided throughout the system.

At the mixing and dispensing head **30**, the two components are mixed according to the accurate ratios of each component supplied to the mixing and dispensing head by the metering pumps **24**, and dispensed onto a substrate **39**. The mixing and dispensing head **30** is also connected to a purge system comprising a solvent supply **40** and an air supply **41**. The purge system is used to purge or clean the head **30** as needed. The solvent may be any suitable solvent. A preferred solvent can be a soap solution as it is relatively benign and does not present any safety hazards. The actual solvent used will depend upon the materials in the system.

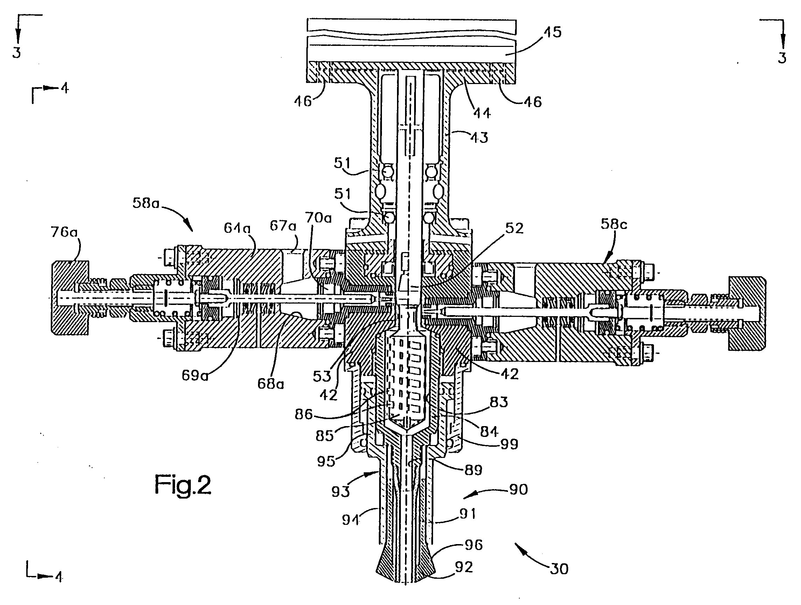

The mixing dispensing head **30** is shown in more detail in FIG. 2 and is more fully described in co-pending patent application, entitled "Dispensing Head for Two-Component Foam," filed on the same date as the filing of this application and assigned to the same assignee. The head **30** comprises a main body **42** with a bearing housing **43** attached to the upper end. A platform **44** is formed on the upper end of the bearing housing **43**, and an electric servo motor **45** is mounted on the platform **44** by means of screws **46**. A rotatable motor shaft **47** extends downwardly from the motor **45** through an opening in the platform **44** into the bearing housing **43.** The motor shaft **47** is connected to a drive shaft **48** by means of a coupling **49**. The drive shaft **48** extends vertically through a central opening in the bearing housing **43**, where it is journalled in bearings **51**, and extends into a coaxial central opening in the main body **42**. A mixing shaft **52** is mounted on the lower end of the drive shaft **48**. The mixing shaft **52** rotates within a mixing chamber **53** formed at the lower end of the central opening in the main body **42**. A suitable sealing device **54** is provided around the lower end of the drive shaft to seal upper end of the mixing chamber **53**.

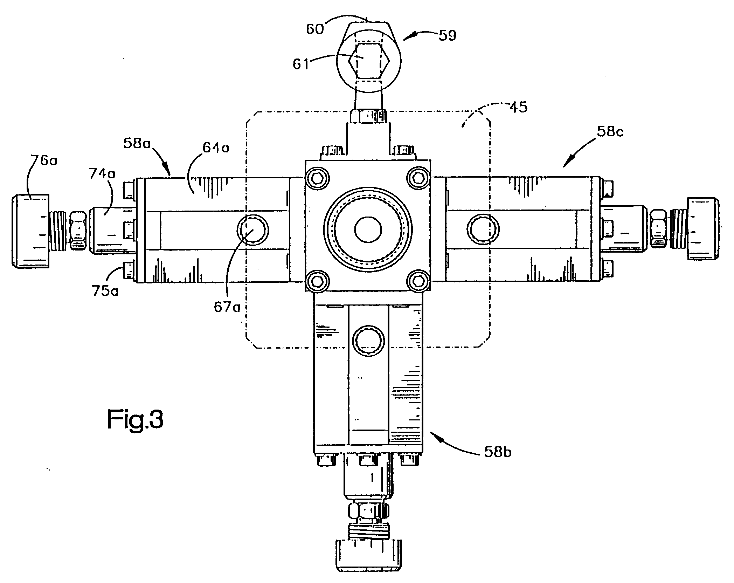

Extending horizontally outwardly from the main body **42** are a plurality of supply valve assemblies **58***a*, **58***b* and **58***c* (FIG. 3). In the preferred embodiment shown, there are three supply valve assemblies **58***a*, **58***b* and **58***c*, two supply valve assemblies **58***a* and **58***b* for the polyol, and one supply valve assembly **58***c* for the isocyanate. Two supply valve assemblies are provided for the polyol, to allow the user to connect the mixing and dispensing head to two different supplies of polyol, such as to change the color of the dispensed material. However, it should be understood that only one polyol supply valve assembly is necessary. The supply valve assemblies extend horizontally in a direction generally perpendicularly to each other. In other words, the supply valve assembly **58***a* is perpendicular to the supply valve assembly **58***b*, and the supply valve assembly **58***b* is perpendicular to the supply valve assembly **58***c*. The supply valve assembly **58***a* is thus opposite the supply valve assembly **58***b*. A purge valve assembly **59** is opposite the other supply valve assembly **58***b*. The purge valve assembly **59** includes a port **60** which provides an inlet for connection to the solvent supply **40** and a port **61** which provides an inlet for connection to the air supply **41**, both as previously described. The purge valve assembly **59** allows the purge solvent and high pressure air to be introduced into the mixing chamber **53** to clean the chamber of component residue as needed. The purge valve assembly **59** also includes a check valve to prevent components from flowing back to the solvent and air supplies **40** and **41**.

All of the supply valve assemblies **58***a*, **58***b* and **58***c* are essentially the same, and all can be described with reference to the supply valve assembly **58***a*. The supply valve assembly **58***a* is pneumatically operated "zero cavity" valve, comprising a body **64***a* which is mounted on the main body **42**. A port **67***a* is provided on one side of the body **64***a* for insertion of a suitable connection to a supply hose, such as one of the supply hoses **28** and **29** shown in FIG. 1. The component material from the supply hose enters the body **64***a* through the port and enters into a supply chamber **68***a* formed within the body **64***a*. The supply chamber **68***a* is connected to the mixing chamber **53** within the main body **42**, and a valve seat is provided between the supply chamber **68***a* and the mixing chamber **53**. A needle valve member **69***a* is mounted in a guide member **70***a* mounted in the downstream portion of the chamber **68***a*. The needle valve member **69***a* extends through the chamber **68***a* and engages the valve seat to control the flow of component material from the supply chamber **68***a* into the mixing chamber **53**. With "zero cavity" valve design, the valve head formed by the needle valve member **69***a* is at the maximum position downstream so that there is no cavity of residual material downstream in the supply chamber prior to entering the mixing chamber. The needle valve member **69***a* is actuated through a pneumatic actuation formed within the body **64***a*.

Referring again to FIG. **2**, the upper portion of the mixing shaft **52** comprises a portion which rotates in the upper portion of the mixing chamber **53** and which is contacted by the component material exiting from the supply valve assembly **58***a*. It will be noted that the supply valve assembly **58***a* is vertically offset from the supply valve assembly **58***c*, so that the components enter the mixing chamber **53** at different vertical levels. In the preferred embodiment, the level of the supply valve assemblies **58***a* and **58***b* is vertically above the level of the supply valve assembly **58***c*, so that the polyol is introduced into the mixing chamber **53** upstream of the isocyanate. This arrangement should be contrasted with impingement mixers of the prior art in which the components enter the mixing chamber opposite each other and mixing is accomplished by shooting the components at each other in the mixing chamber.

Below the mixing chamber **53** is an enlarged mixing chamber **83** formed within a tubular extension **84** mounted on the lower portion of the main body **42**. Within the extension **84** is a cylindrical mixing core **85** having an array of indentations and outwardly extending angled vanes **86**. The mixing core **85** is mounted to the lower end of the mixing shaft **52**, and the core rotates within the enlarged mixing chamber **83** as the mixing shaft turns. As the cylindrical mixing core **85** rotates, the vanes **86** create turbulence which mixes the components supplied from the supply valve assemblies **58** until the components are thoroughly mixed together to create the chemical reaction which produces the foam which is then ready to be dispensed from the mixing and dispensing head **30**. At the bottom of the extension **84**, the mixing chamber **53** tapers to a dispensing channel **89**. Below the dispensing channel is a flow shutoff assembly **90** which prevents residual portions of the mixed components from dripping or dribbling from the head when the supply valve assemblies have been closed. The flow shutoff assembly **90** comprises a flexible tube **91** which is attached at the lower end of the dispensing channel **89**, and the mixed components which are dispensed by the head enter the flexible tube **91** after exiting from the dispensing channel **89**. Adjacent to the lower end of the flexible tube **91** are pincher fingers **92**. The pincher fingers **92** are capable of moving inwardly to compress or pinch the tube **91** to stop the flow of mixed components from the end of the tube. A piston/collet member **93** is positioned around the pincher fingers **92**. The piston/collet member **93** has a lower portion forming a tubular actuating toilet **94** and an integral upper portion forming a piston **95**. The pincher fingers **92** are cammed inwardly by the vertically movable actuating collet **94** which surrounds the fingers. The lower end of the fingers **92** have camming surfaces **96** which extend radially outwardly from the flexible tube **91**. As the actuating collet **94** moves downwardly, it engages the camming surfaces **96** of the fingers **92** and forces the fingers **92** radially inwardly to pinch the tube **91** and cut off the flow of product from the tube. The piston **95** fits around the exterior of the extension **84**, and a ring **99**, which is attached to the lower end of the main body **42**, fits around the flange **98** and around exterior of the piston **95**. The piston/collet member **93** is moved by actuation of pneumatic chambers and/or springs formed between the ring **99** and the piston **95**.

Other variations and modifications of the specific embodiments herein shown and described will be apparent to those skilled in the art, all within the intended spirit and scope of the invention. While the invention has been shown and described with respect to particular embodiments thereof, these are for the purpose of illustration rather than limitation. Accordingly, the patent is not to be limited in scope and effect to the specific embodiments herein shown and described nor in any other way that is inconsistent with the extent to which the progress in the art has been advanced by the invention.

## Claims

1. A method of dispensing a foam material, comprising the steps of:
maintaining separate reservoirs of at least two different components which react chemically with one another when combined to produce the foam material;
providing a dispensing head for mixing the components immediately prior to dispensing the foam material and for dispensing the foam intermittently therefrom; and
withdrawing the components from the reservoirs and supplying the components to the dispensing head only when the foam material is dispensed.

2. The method of claim 1, wherein the components are supplied to the dispensing head using metering pumps to control the mass ratio of the flow of at least one of the components relative to the flow of the other component.

3. The method of claim 1, comprising the additional step of maintaining the components in supply lines connected to the dispensing head while the foam material is not being dispensed, and temperature conditioning the components in the supply lines.

4. The method of claim 1, comprising the additional step of injecting gas into one of the components.

5. A method of dispensing a foam material, comprising the steps of:
maintaining separate reservoirs of at least two different components which react chemically with one another when combined to produce the foam material;
providing a dispensing head for mixing the components immediately prior to dispensing the foam material; and
using metering pumps to supply the components to the dispensing head only when the foam material is dispensed, and using the metering pumps to control the flow rate of at least one of the components and to control the mass ratio of at least one of the components relative to the other component.

6. The method of claim 5, comprising the additional step of maintaining the components in supply lines connected to the dispensing head while the foam material is not being dispensed, and temperature conditioning the components in the supply lines.

7. The method of claim 5, comprising the additional step of injecting gas into one of the components after the component leaves the metering pumps.

8. The method of claim 5, comprising the additional step of removing the components from the reservoirs and pumping the components at pressures in excess of 300 psi to force any gas mixed with the components into solution.

9. A mixing and dispensing system for mixing and dispensing at least two different components which react chemically with one another when combined to produce a foam product, the system comprising:
at least two tanks, each containing one of the components;
a mixing and dispensing head having a plurality of flow inlets and an outlet, the mixing and dispensing head intermittently dispensing the foam product from the outlet and mixing the two components together to form the foam product immediately prior to dispensing;
supply lines connected to the liquid flow inlets of the mixing and dispensing bead, the components flowing to the mixing and dispensing head through the supply lines when the foam product is dispensed, the components being held in the supply lines when the foam product is not being dispensed and flow of components is interrupted;
metering pumps for supplying the different components under pressure to the supply lines, the metering pumps including controls for adjusting the pressure at which at least one of the components is supplied to the supply lines when the flow of the components is interrupted; and
a temperature conditioner connected to the supply lines for maintaining the temperature of the components in the supply lines when the flow of components is interrupted.

10. The mixing and dispensing system of claim 9, comprising in addition a gas injection system for injecting gas into the supply line of at least one of the components downstream of the metering pumps.
